# EUROPEAN PATENT APPLICATION

(11) **EP 4 415 465 A1**
(43) Date of publication of application: **14.08.2024**
(21) Application number: 21959743.2
(22) Date of filing: 09.10.2021
(51) Int. Cl.: H04W 74/00

(54) **COMMUNICATION METHOD AND APPARATUS, AND ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Hughes, Andrea Michelle
(86) International application number: PCT/CN2021/122934
(87) International publication number: WO 2023/056653

(57) **Abstract**

The embodiments of the present disclosure relate to the technical field of mobile communications. Provided are a communication method and apparatus, and an electronic device and a storage medium. The method is applied to supporting a non-access point multi-link device (Non-AP MLD). The method comprises: sending a first radio frame, wherein the first radio frame carries basic service set (BSS) change indication information, the BSS change indication information comprises BSS change parameters, which are between access point multi-link devices (AP MI,Ds), and the BSS change parameters comprise a change sequence element and/or a change count value. In the embodiments of the present disclosure, a manner of indicating, in a multi-link scenario, that a BSS parameter has changed is provided.

## Description

### TECHNICAL FIELD

Embodiments of the present disclosure relate to the field of mobile communication technologies, and more particularly, to a communication method and device, an electronic device, and a storage medium.

### BACKGROUND

With the rapid development of mobile communication technologies, Wireless Fidelity (Wi-Fi) technologies have made great progress in terms of transmission rate and throughput. At present, the Wi-Fi technologies are researched on content such as bandwidth transmission of 320 MHz, aggregation and cooperation of a plurality of frequency bands, etc., whose main application scenarios are, for example, video transmission, Augmented Reality (AR), Virtual Reality (VR), etc.

Specifically, the aggregation and cooperation of the plurality of frequency bands means that devices communicate with each other in frequency bands of 2.4GHz, 5.8GHz, 6GHz and other frequency bands simultaneously. For a scenario of the simultaneous communications between the devices in the plurality of frequency bands, a new Media access Control (MAC) mechanism also needs to be defined for management. In addition, it is expected that the aggregation and cooperation of the plurality of frequency bands can support a low-latency transmission.

At present, aggregation and cooperation technologies of the plurality of frequency bands will support a maximum bandwidth of 320MHz (160MHz+160MHz), and may also support 240MHz (160MHz+80MHz) and other bandwidths supported by the existing standards.

In the Wi-Fi technologies currently being studied, multi-link communication will be supported. For example, in a wireless local area network, a Basic Service Set (BSS) may consist of an Access Point (AP) and one or more Stations (STAs) that communicate with the AP, and the AP and the STA may be Multi-Link Devices (MLDs), respectively. The MLD supports a function of simultaneous transmission and/or reception under a plurality of links. Therefore, there may be the plurality of links between the AP MLD and the STA MLD for communication. In a multi-link scenario, a plurality of BSS parameters related to the BSS are included, and the BSS parameters may change (or be updated). Therefore, it is necessary to provide a way to indicate a change in the BSS parameter in the multi-link scenario.

### SUMMARY

Embodiments of the present disclosure provide a communication method and device, an electronic device, and a storage medium to provide a way to indicate a change in a BSS parameter in a multi-link scenario.

In an aspect, embodiments of the present disclosure provide a communication method, which is applied to a multi-link-supporting station device (a Non-AP MLD), and the communication method includes:
sending a first radio frame, wherein Basic Service Set (BSS) change indication information is carried in the first radio frame, the BSS change indication information includes a BSS change parameter with an access point device (an AP MLD), and the BSS change parameter includes a Change Sequence element and/or a Change Count.

In another aspect, embodiments of the present disclosure further provide a communication method, which is applied to a multi-link-supporting access point device (an AP MLD), and the communication method includes:
receiving a first radio frame, wherein Basic Service Set (BSS) change indication information is carried in the first radio frame, the BSS change indication information includes a BSS change parameter with a station device (a Non-AP MLD), and the BSS change parameter includes a Change Sequence element and/or a Change Count.

In another aspect, embodiments of the present disclosure further provide a station device, which is a multi-link station device (a Non-AP MLD), and the station device includes:
a sending module, configured to send a first radio frame, wherein Basic Service Set (BSS) change indication information is carried in the first radio frame, the BSS change indication information includes a BSS change parameter with an access point device (an AP MLD), and the BSS change parameter includes a Change Sequence element and/or a Change Count.

In another aspect, embodiments of the present disclosure further provide an access point device, which is a multi-link-supporting access point device (an AP MLD), and the access point device includes:
a radio frame receiving module, configured to receive a first radio frame, wherein Basic Service Set (BSS) change indication information is carried in the first radio frame, the BSS change indication information includes a BSS change parameter with a station device (a Non-AP MLD), and the BSS change parameter includes a Change Sequence element and/or a Change Count.

In another aspect, embodiments of the present disclosure further provide a communication device, applied to a multi-link station device (a Non-AP MLD), and the communication device includes:
a first sending module, configured to send a first radio frame, wherein Basic Service Set (BSS) change indication information is carried in the first radio frame, the BSS change indication information includes a BSS change parameter with an access point device (an AP MLD), and the BSS change parameter includes a Change Sequence element and/or a Change Count.

In another aspect, embodiments of the present disclosure further provide a communication device, applied to a multi-link-supporting access point device (an AP MLD), and the communication device includes:
a first receiving module, configured to receive a first radio frame, wherein Basic Service Set (BSS) change indication information is carried in the first radio frame, the BSS change indication information includes a BSS change parameter with a station device (a Non-AP MLD), and the BSS change parameter includes a Change Sequence element and/or a Change Count.

Embodiments of the present disclosure further provide an electronic device, including a memory, a processor, and a computer program stored in the memory and executable on the processor, wherein the processor implements one or more of the methods described in embodiments of the present disclosure when executing the program.

Embodiments of the present disclosure further provide a computer-readable storage medium having a computer program stored thereon which, when executed by a processor, implements one or more of the methods described in embodiments of the present disclosure

In embodiments of the present disclosure, the non-AP MLD sends the first radio frame to request update content of system information of the AP MLD, the first radio frame carries the BSS change indication information, and the BSS change indication information includes the BSS change parameter for the one or more communication links between the non-AP MLD and the AP MLD to provide the way to indicate the change in the BSS parameter in the multi-link scenario.

Additional aspects and advantages of embodiments of the present disclosure will be given in part in the following description, and will be apparent from the following description, or may be learned by practice of the present disclosure.

### BRIEF DESCRIPTION OF THE DRAWINGS

In order to more clearly illustrate the technical solutions in embodiments of the present disclosure, drawings used in the description of the embodiments of the present disclosure are briefly described below. It is obvious that the drawings below are just some embodiments of the present disclosure, and other drawings may also be obtained by those skilled in the art based on these drawings without paying any creative effort.
FIG. 1 is a first flowchart of a communication method provided by an embodiment of the present disclosure;
FIG. 2 is a schematic diagram of a first example of an embodiment of the present disclosure;
FIG. 3 is a second flowchart of a communication method provided by an embodiment of the present disclosure;
FIG. 4 is a third flowchart of a communication method provided by an embodiment of the present disclosure;
FIG. 5 is a first schematic structural diagram of a communication device provided by an embodiment of the present disclosure;
FIG. 6 is a second schematic structural diagram of a communication device provided by an embodiment of the present disclosure; and
FIG. 7 is a schematic structural diagram of an electronic device provided by an embodiment of the present disclosure.

### DETAILED DESCRIPTION

The term "and/or" in embodiments of the present disclosure describes an association relationship between associated objects and represents that three relationships may exist. For example, A and/or B may represent the following three cases: only A exists, both A and B exist, and only B exists. The character "/" generally indicates an "or" relationship between the associated objects

The term "a plurality of" in embodiments of the present disclosure indicates two or more than two, and another quantifier is similar to this.

Reference will now be made in detail to embodiments, examples of which are illustrated in the accompanying drawings. The following description refers to the accompanying drawings in which the same numbers in different drawings represent the same or similar elements unless otherwise represented. Implementations set forth in the following description of embodiments do not represent all implementations consistent with the present disclosure. Instead, they are merely examples of devices and methods consistent with some aspects related to the present disclosure as recited in the appended claims.

The terms used in the present disclosure are merely for the purpose of describing particular embodiments and are not intended to limit the present disclosure. As used in the present disclosure and the appended claims, the singular forms "a", "said" and "the" are intended to include the plural forms as well, unless the context clearly indicates otherwise. It should also be understood that the term "and/or" as used herein refers to and includes any or all possible combinations of one or more of the associated listed items.

It should be understood that, although the terms first, second, third, etc. may be used in embodiments of the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if" as used herein can be interpreted as "upon" or "when" or "in response to determination".

The technical solutions in embodiments of the present disclosure will be clearly and completely described below with reference to the accompanying drawings in embodiments of the present disclosure. Obviously, the described embodiments are only some embodiments of the present disclosure, rather than all embodiments of the present disclosure. Based on the embodiments in the present disclosure, all other embodiments obtained by those of ordinary skill in the art without creative efforts fall within the protection scope of the present disclosure.

Embodiments of the present disclosure provide a communication method and device, an electronic device, and a storage medium to provide a way to indicate a change in a BSS parameter in a multi-link scenario.

The method and the device are based on the same concept. Since principles of the method and the device to solve the problem are similar, implementations of the device and the method may be referred to each other, and the repeated details will not be repeated.

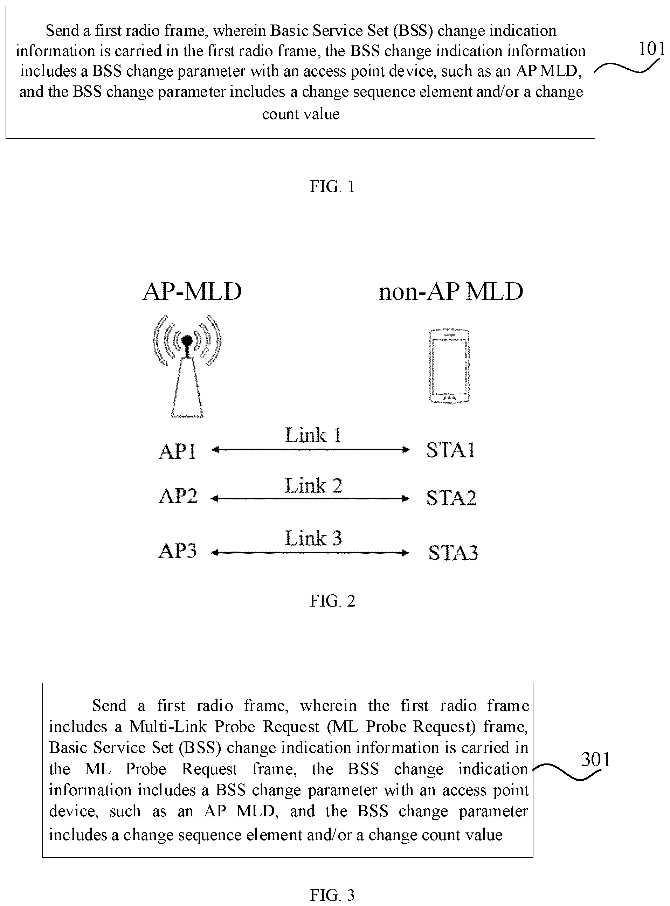

As shown in FIG. 1, embodiments of the present disclosure provide a communication method, which may be applied to a multi-link-supporting station device (a Non-AP MLD), and the communication method may include a step 101.

In the step 101, a first radio frame is sent, Basic Service Set (BSS) change indication information is carried in the first radio frame, the BSS change indication information includes a BSS change parameter with an access point device (an AP MLD), and the BSS change parameter includes a Change Sequence element and/or a Change Count.

In embodiments of the present disclosure, the AP and the STA may be devices supporting a plurality of links, which may be, for example, denoted as the AP MLD and the non-AP MI,D, respectively. For ease of description, an example in which one AP communicates with one STA under the plurality of links is mainly described in the following, but the embodiments of the present disclosure are not limited to this.

As a first example, referring to FIG. 2, the AP MLD may represent an access point supporting a multi-link communication function, and the non-AP MLD may represent a station supporting the multi-link communication function. Referring to FIG. 2, the AP MLD can work under three communication links, such as AP1, AP2 and AP3 shown in FIG. 2, and each AP can work in (communication) Link 1, Link 2 and Link 3, respectively; and the non-AP MLD can also work under three links, such as STA1, STA2 and STA3 shown in FIG. 2, and STA1 works in Link 1, STA2 works in Link 2 and STA3 works in Link 3. In the example of FIG. 2, it is assumed that AP1 communicates with STA1 through a corresponding first link i.e., Link 1. Similarly, AP2 communicates with STA2 through a corresponding second link, i.e., Link 2, and AP communicates with STA3 through a third link, i.e., Link 3. Moreover, Link 1 to Link 3 may be a plurality of links at different frequencies, respectively, for example, links at 2.4GHz, 5GHz, 6GHz, etc., or several links with the same or different bandwidths at 2.4GHz. In addition, there may exist a plurality of channels under each link. It should be understood that the communication scenario shown in FIG. 2 is only illustrative, and the concept of the present disclosure is not limited thereto. For example, the AP MLD may be connected to a plurality of non-AP MI,Ds, or the AP can communicate with a plurality of other types of stations under each link.

When system information of the AP MLD is updated, the non-AP MLD needs to know an update status. Therefore, the non-AP MLD sends to the AP MLD the first radio frame carrying the Basic Service Set (BSS) change indication information, so as to obtain the update content of the system information under one or more communication links. In some embodiments, the non-AP MLD may send the first radio frame in one communication link with the AP MLD to save signaling resources.

In some embodiments, the BSS change indication information includes a BSS change parameter for one communication link or at least two communication links with the AP MLD, and the BSS change parameter includes at least one of the Change Sequence element or the Change Count. In some embodiments, when the AP MLD receives, from the non-AP MLD, the first radio frame that includes the Change Sequence element, the AP MLD compares the received change sequence field value with its current most recently (most recently, i.e., closest to the current time) maintained change sequence field value. If the comparison result indicates that they are not equal, the AP MLD sends to the non-AP MLD the Change Sequence element and other elements that need to be updated by the non-AP MLD, so that the non-AP MLD executes the corresponding operation according to this update.

As a first example, a Change Sequence element format is shown in Table 1 below.

**Table 1**

| Information content | Element ID | Length | Change Sequence element |
|---|---|---|---|
| Octets | 1 | 1 | 1 |

In Table 1, the Change Sequence element includes 3 sub-elements, each occupying 1 byte.

The Change Count records a BSS parameter change count of the AP MLD. In general, an initial value of the Change Count of each AP is 0, and should be incremented (modulo operation, modulo 256) when a critical update of an operation parameter of the AP occurs. For example, the critical update of the operation parameter of the AP occurs, the Change Count is N (N is a natural number), and N is increased to N+1, then the modulo value of N+1 is taken with 256 to obtain the updated Change Count.

In some embodiments, the first radio frame may be an ML Probe Request.

In this way, the non-AP MLD sends the first radio frame under one link to request the system information update status of the AP MLD. The non-AP MLD may not send, under each link, the BSS change parameter corresponding to this link to save the signaling message. For example, BSS change parameters for all links are sent under one link.

In embodiments of the present disclosure, the non-AP MLD sends the first radio frame to request the update content of the system information of the AP MLD, the first radio frame carries the BSS change indication information, and the BSS change indication information includes the BSS change parameter for the one or more communication links between the non-AP MLD and the AP MLD to provide the way to indicate the change in the BSS parameter in the multi-link scenario.

In an embodiment, the BSS change indication information further includes: link identity information of a target communication link corresponding to each BSS change parameter.

The link identity information is Link ID, which identifies a link where the Change Sequence element and/or the Change Count changes, and the Link ID and the link are in a one-to-one correspondence. In a case that the BSS change indication information includes BSS change parameters for a plurality of communication links, a corresponding target communication link may be added for each BSS change parameter. As a second example, a BSS change indication information format is as shown in Table 2 below.

**Table 2**

| | | | | |
|---|---|---|---|---|
| Link ID1 | Change Sequence element / Change Count | Link ID2 | Change Sequence element/Change Count | ... |

Each Link ID includes the Change Sequence element and/or the Change Count corresponding to it.

In an embodiment, before sending the first radio frame, the communication method further includes:
receiving a second radio frame; and
obtaining the link identity information in a first Multi-Link (ML) element in the second radio frame.

In some embodiments, the second radio frame may be a beacon frame. The non-AP MLD receives the second radio frame under each communication link, and obtains the link identity information in the first ML element carried by the AP MLD in the second radio frame.

In an embodiment, the BSS change indication information further includes: BSS Parameter Change Count Present, and the BSS Parameter Change Count Present is configured to indicate whether the BSS change indication information is included, that is, whether the first radio frame includes the BSS change indication information. For example, an indication field is newly added to an element of the first radio frame, in which the BSS Parameter Change Count Present is carried. For example, when the non-AP MLD has monitored the Change Count in the second radio frame, which indicates that the system information of the AP MLD has been updated, the non-AP MLD sets a value of the BSS Parameter Change Count Present as 1 to indicate that the first radio frame is configured to request to obtain the system information updated by the AP MLD. In addition, the non-AP MLD may also increase the current Change Count (denoted as M) by 1, carry the Change Count increased by 1 (denoted as M+1) in the first radio frame and send it to the AP MLD, so that the AP MLD updates the current Change Count as M+1.

In an embodiment, the BSS change indication information further includes: a Multi-Link Device Identity (MLD ID); and
the MLD ID includes a Media Access Control (MAC) address of the Non-AP MLD, that is, an identity of the Non-AP MLD that requests the update content of the system information of the AP MLD is carried in the BSS change indication information, and the Media Access Control Address (MAC) is used as the MLD ID.

As a third example, the BSS change indication information format is as shown in Table 3 below:

**Table 3**

| | | | | | |
|---|---|---|---|---|---|
| MLD ID | Link ID1 | Change Sequence element / Change Count | Link ID2 | Change Sequence element/Change Count | ... |

In Table 3, the MLD ID includes a plurality of Links, and the Link ID of each Link includes the Change Sequence element and/or Change Count corresponding to it.

In an embodiment, sending the first radio frame includes:
sending the first radio frame in one communication link.

The non-AP MLD sends the first radio frame under one link to request the AP MLD to send BSS change parameters corresponding to all communication links to save the signaling message and reduce the possibility of conflicts. In addition, the reduction of the sending of the signaling message can reduce power consumption.

In an embodiment, sending the first radio frame includes:
sending the first radio frame when the Non-AP MLD is in an energy saving state.

The energy saving state is a Power Save state. The Non-AP MLD in the Power Save state may send the first radio frame without being awake, that is, when the Non-AP MLD sends the first radio frame, it does not need to switch from the Power Save state to an awake state to further save power.

Referring to FIG. 3, embodiments of the present disclosure further provide a communication method, which may be applied to a Non-AP MLD, and the communication method may include a step 301.

In the step 301, a first radio frame is sent, and the first radio frame includes a multi-link probe request (ML Probe Request).

The ML Probe Request carries Basic Service Set (BSS) change indication information, the BSS change indication information includes a BSS change parameter with an access point device (the AP MLD), and the BSS change parameter includes a Change Sequence element and/or a Change Count.

The BSS change indication information is carried in a second ML information element of the ML Probe Request, and a type of the second ML information element is Probe Request.

When system information of the AP MLD is updated, the non-AP MLD needs to know an update status. Therefore, the non-AP MLD sends to the AP MLD the ML Probe Request carrying the Basic Service Set (BSS) change indication information, so as to obtain the update content of the system information under one or more communication links. In some embodiments, the non-AP MLD may send the ML Probe Request in one communication link with the AP MLD to save signaling resources.

In some embodiments, the BSS change indication information includes a BSS change parameter for one communication link or at least two communication links with the AP MLD, and the BSS change parameter includes at least one of the Change Sequence element or the Change Count.

Specifically, the ML Probe Request includes the second ML information element, and a type of the second ML information element is Probe Request. As a fourth example, the type subfield encoding of the second ML information element is as shown in Table 4, and its type is Probe Request.

**Table 4**

| Type subfield value | Multi-Link element variant name |
|---|---|
| 0 | Basic |
| 1 | Probe Request |
| 2-7 | Reserved |

Further, a format of the second ML information element is shown in Table 5, which includes Element ID, Length, Element ID Extension, Multi-Link Control, Common information, etc.

**Table 5**

| Information content | Element ID | Length | Element ID Extension | Multi-Link Control | Common info | Link info |
|---|---|---|---|---|---|---|
| Octets | 1 | 1 | 1 | 2 | variable | variable |

As shown in Table 5, the second ML information element includes a multi-link control field. Further, an identity presence bitmap in the multi-link control field carries the BSS change indication information, as shown in Table 6.

**Table 6**

| Content | Type | Reserved | Presence Bitmap |
|---|---|---|---|
| Bits | 3 | 1 | 12 |
| Bit order | B0 to B2 | B3 to B4 | B5 to B15 |

An indication field is newly added to the Presence Bitmap in Table 6 to carry the BSS change indication information.

In an embodiment, the second ML information element further includes a station configuration sub-element (e.g., a per-STA profile sub-element), and the BSS change indication information is carried in the station configuration sub-element (e.g., the per-STA profile sub-element) of the second ML information element. An indication field is newly added to the per-STA profile sub-element of the second ML information element to carry the BSS change indication information.

In embodiments of the present disclosure, the non-AP MLD sends the ML Probe Request to request the update content of the system information of the AP MLD, the ML Probe Request carries the BSS change indication information, and the BSS change indication information includes the BSS change parameter for the one or more communication links between the non-AP MLD and the AP MLD to provide the way to indicate the change in the BSS parameter in the multi-link scenario.

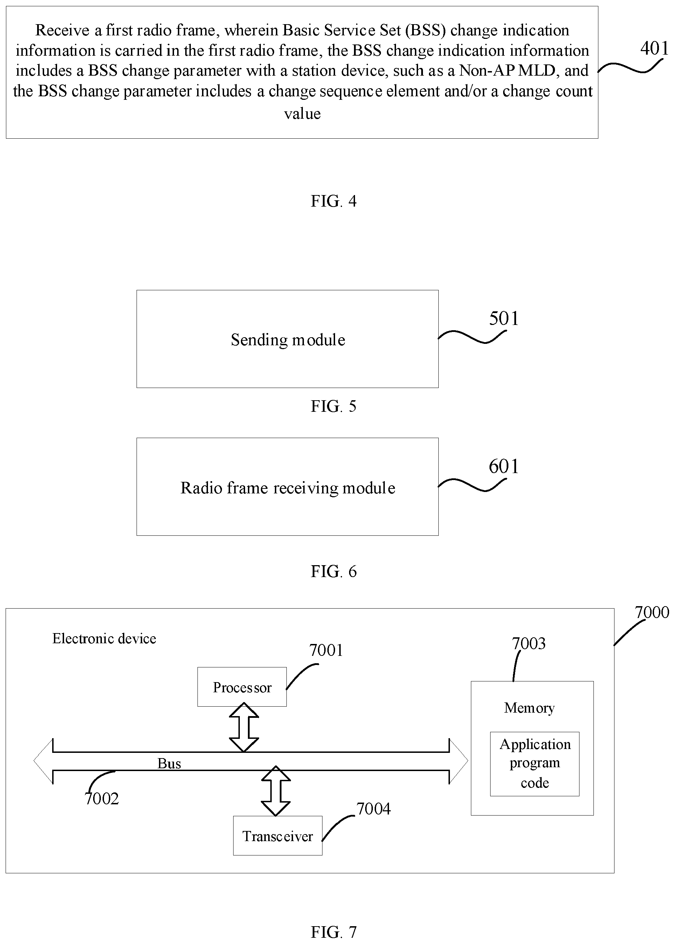

Referring to FIG. 4, embodiments of the present disclosure further provide a communication method, which is applied to a multi-link-supporting access point device (an AP MLD), and the communication method includes a step 401.

In the step 401, a first radio frame is received, Basic Service Set (BSS) change indication information is carried in the first radio frame, the BSS change indication information includes a BSS change parameter with a station device (a Non-AP MLD), and the BSS change parameter includes a Change Sequence element and/or a Change Count.

In embodiments of the present disclosure, the AP and the STA may be devices supporting a plurality of links, which may be, for example, denoted as the AP MLD and the non-AP MI,D, respectively. For ease of description, an example in which one AP communicates with one STA under the plurality of links is mainly described in the following, but the embodiments of the present disclosure are not limited to this.

As a first example, referring to FIG. 2, the AP MLD may represent an access point supporting a multi-link communication function, and the non-AP MLD may represent a station supporting the multi-link communication function. Referring to FIG. 2, the AP MLD can work under three communication links, such as AP1, AP2 and AP3 shown in FIG. 2, and each AP can work in (communication) Link 1, Link 2 and Link 3, respectively; and the non-AP MLD can also work under three links, such as STA1, STA2 and STA3 shown in FIG. 2, and STA1 works in Link 1, STA2 works in Link 2 and STA3 works in Link 3. In the example of FIG. 2, it is assumed that AP1 communicates with STA1 through a corresponding first link i.e., Link 1. Similarly, AP2 communicates with STA2 through a corresponding second link, i.e., Link 2, and AP communicates with STA3 through a third link, i.e., Link 3. Moreover, Link 1 to Link 3 may be a plurality of links at different frequencies, respectively, for example, links at 2.4GHz, 5GHz, 6GHz, etc., or several links with the same or different bandwidths at 2.4GHz. In addition, there may exist a plurality of channels under each link. It should be understood that the communication scenario shown in FIG. 2 is only illustrative, and the concept of the present disclosure is not limited thereto. For example, the AP MLD may be connected to a plurality of non-AP MI,Ds, or the AP can communicate with a plurality of other types of stations under each link.

When system information of the AP MLD is updated, the non-AP MLD needs to know an update status. Therefore, the non-AP MLD sends to the AP MLD the first radio frame carrying the Basic Service Set (BSS) change indication information, so as to obtain the update content of the system information under one or more communication links. In some embodiments, the non-AP MLD may send the first radio frame in one communication link with the AP MLD to save signaling resources.

In some embodiments, the BSS change indication information includes a BSS change parameter for one communication link or at least two communication links with the AP MLD, and the BSS change parameter includes at least one of the Change Sequence element or the Change Count.

The Change Count records a BSS parameter change count of the AP MLD. In general, an initial value of the Change Count of each AP is 0, and should be incremented (modulo 256) when a critical update of an operation parameter of the AP occurs.

In some embodiments, the first radio frame may be an ML Probe Request.

In this way, the non-AP MLD sends the first radio frame under one link to request the system information update status of the AP MLD. The non-AP MLD may not send, under each link, the BSS change parameter corresponding to this link to save the signaling message. For example, BSS change parameters for all links are sent under one link.

After receiving the first radio frame, the AP MLD compares the change sequence field value in the BSS change parameter with its current most recently maintained change sequence field value. If the comparison result indicates that they are not equal, the AP MLD sends to the non-AP MLD the Change Sequence element and other elements that need to be updated by the non-AP MLD, so that the non-AP MLD executes the corresponding operation according to this update.

In an embodiment, before receiving the first radio frame, the communication method further includes:
sending a second radio frame, and a first Multi-Link (ML) element in the second radio frame carries link identity information.

In some embodiments, the second radio frame may be a beacon frame, and the AP MLD sends the second radio frame to the non-AP MLD under each communication link, and carries, in the second radio frame, the link identity information in the first ML element.

In embodiments of the present disclosure, the AP MLD receives the first radio frame, the first radio frame carries the BSS change indication information, and the BSS change indication information includes the BSS change parameter for the one or more communication links between the non-AP MLD and the AP MLD to provide the way to indicate the change in the BSS parameter in the multi-link scenario.

Based on the same principles as the methods provided by embodiments of the present disclosure, embodiments of the present disclosure further provide a station device. The station device may refer to a device that provides voice and/or data connectivity to a user, a handheld device with a wireless connection function, or other processing devices connected to a wireless modem, etc.

As shown in FIG. 5, embodiments of the present disclosure provide a station device, which may be a multi-link station device (a Non-AP MLD), and the station device includes:

a sending module 501, configured to send a first radio frame, Basic Service Set (BSS) change indication information is carried in the first radio frame, the BSS change indication information includes a BSS change parameter with an access point device (an AP MLD), and the BSS change parameter includes a Change Sequence element and/or a Change Count.

In embodiments of the present disclosure, the AP and the STA may be devices supporting a plurality of links, which may be, for example, denoted as the AP MLD and the non-AP MI,D, respectively. For ease of description, an example in which one AP communicates with one STA under the plurality of links is mainly described in the following, but the embodiments of the present disclosure are not limited to this.

As a first example, referring to FIG. 2, the AP MLD may represent an access point supporting a multi-link communication function, and the non-AP MLD may represent a station supporting the multi-link communication function. Referring to FIG. 2, the AP MLD can work under three communication links, such as AP1, AP2 and AP3 shown in FIG. 2, and each AP can work in (communication) Link 1, Link 2 and Link 3, respectively; and the non-AP MLD can also work under three links, such as STA1, STA2 and STA3 shown in FIG. 2, and STA1 works in Link 1, STA2 works in Link 2 and STA3 works in Link 3. In the example of FIG. 2, it is assumed that AP1 communicates with STA1 through a corresponding first link i.e., Link 1. Similarly, AP2 communicates with STA2 through a corresponding second link, i.e., Link 2, and AP communicates with STA3 through a third link, i.e., Link 3. Moreover, Link 1 to Link 3 may be a plurality of links at different frequencies, respectively, for example, links at 2.4GHz, 5GHz, 6GHz, etc., or several links with the same or different bandwidths at 2.4GHz. In addition, there may exist a plurality of channels under each link. It should be understood that the communication scenario shown in FIG. 2 is only illustrative, and the concept of the present disclosure is not limited thereto. For example, the AP MLD may be connected to a plurality of non-AP MI,Ds, or the AP can communicate with a plurality of other types of stations under each link.

When system information of the AP MLD is updated, the non-AP MLD needs to know an update status. Therefore, the non-AP MLD sends to the AP MLD the first radio frame carrying the Basic Service Set (BSS) change indication information, so as to obtain the update content of the system information under one or more communication links. In some embodiments, the non-AP MLD may send the first radio frame in one communication link with the AP MLD to save signaling resources.

In some embodiments, the BSS change indication information includes a BSS change parameter for one communication link or at least two communication links with the AP MLD, and the BSS change parameter includes at least one of the Change Sequence element or the Change Count. In some embodiments, when the AP MLD receives, from the non-AP MLD, the first radio frame that includes the Change Sequence element, the AP MLD compares the received change sequence field value with its current most recently maintained change sequence field value. If the comparison result indicates that they are not equal, the AP MLD sends to the non-AP MLD the Change Sequence element and other elements that need to be updated by the non-AP MLD, so that the non-AP MLD executes the corresponding operation according to this update. As a first example, a Change Sequence element format is shown in Table 1 below.

**Table 1**

| Information content | Element ID | Length | Change Sequence element |
|---|---|---|---|
| Octets | 1 | 1 | 1 |

In Table 1, the Change Sequence element includes 3 sub-elements, each occupying 1 byte.

The Change Count records a BSS parameter change count of the AP MLD. In general, an initial value of the Change Count of each AP is 0, and should be incremented (modulo 256) when a critical update of an operation parameter of the AP occurs.

In some embodiments, the first radio frame may be an ML Probe Request.

In this way, the non-AP MLD sends the first radio frame under one link to request the system information update status of the AP MLD. The non-AP MLD may not send, under each link, the BSS change parameter corresponding to this link to save the signaling message. For example, BSS change parameters for all links are sent under one link.

In some embodiments of the present disclosure, the BSS change indication information further includes: link identity information of a target communication link corresponding to each BSS change parameter.

In some embodiments of the present disclosure, the station device further includes:
a receiving module, configured to receive a second radio frame; and
an obtaining module, configured to obtain the link identity information in a first Multi-Link (ML) element in the second radio frame.

In some embodiments of the present disclosure, the BSS change indication information further includes BSS Parameter Change Count Present, and the BSS Parameter Change Count Present is configured to indicate whether the BSS change indication information is included.

In some embodiments of the present disclosure, the BSS change indication information further includes: a Multi-Link Device Identity (MLD ID); and
the MLD ID includes a Media Access Control (MAC) address of the Non-AP MLD.

In some embodiments of the present disclosure, the sending module 501 includes:
a first sending sub-module, configured to send the first radio frame in one communication link.

In some embodiments of the present disclosure, the sending module 501 includes:
a second sending sub-module, configured to send the first radio frame when the Non-AP MLD is in an energy saving state.

In some embodiments of the present disclosure, the first radio frame includes a Multi-Link Probe Request (ML Probe Request); and
the BSS change indication information is carried in a second ML information element of the ML Probe Request, and a type of the second ML information element is Probe Request.

In some embodiments of the present disclosure, the BSS change indication information is carried in a per-STA profile sub-element of the second ML information element.

In some embodiments of the present disclosure, the BSS change indication information includes a BSS change parameter for one communication link or at least two communication links with the AP MLD.

In embodiments of the present disclosure, the sending module 501 sends the first radio frame to request the update content of the system information of the AP MLD, the first radio frame carries the BSS change indication information, and the BSS change indication information includes the BSS change parameter for the one or more communication links between the non-AP MLD and the AP MLD to provide the way to indicate the change in the BSS parameter in the multi-link scenario.

Embodiments of the present disclosure further provide a communication device, applied to a multi-link station device (a Non-AP MLD), and the communication device includes:
a first sending module, configured to send a first radio frame, Basic Service Set (BSS) change indication information is carried in the first radio frame, the BSS change indication information includes a BSS change parameter with an access point device (an AP MLD), and the BSS change parameter includes a Change Sequence element and/or a Change Count.

The communication device further includes other modules of the station device in the above embodiments, which will not be described again here.

Referring to FIG. 6, embodiments of the present disclosure further provide an access point device, which may be a multi-link-supporting access point device (an AP MLD), and the access point device includes:

a radio frame receiving module 601, configured to receive a first radio frame, Basic Service Set (BSS) change indication information is carried in the first radio frame, the BSS change indication information includes a BSS change parameter with a station device (a Non-AP MLD), and the BSS change parameter includes a Change Sequence element and/or a Change Count.

In embodiments of the present disclosure, the AP and the STA may be devices supporting a plurality of links, which may be, for example, denoted as the AP MLD and the non-AP MI,D, respectively. For ease of description, an example in which one AP communicates with one STA under the plurality of links is mainly described in the following, but the embodiments of the present disclosure are not limited to this.

As a first example, referring to FIG. 2, the AP MLD may represent an access point supporting a multi-link communication function, and the non-AP MLD may represent a station supporting the multi-link communication function. Referring to FIG. 2, the AP MLD can work under three communication links, such as AP1, AP2 and AP3 shown in FIG. 2, and each AP can work in (communication) Link 1, Link 2 and Link 3, respectively; and the non-AP MLD can also work under three links, such as STA1, STA2 and STA3 shown in FIG. 2, and STA1 works in Link 1, STA2 works in Link 2 and STA3 works in Link 3. In the example of FIG. 2, it is assumed that AP1 communicates with STA1 through a corresponding first link i.e., Link 1. Similarly, AP2 communicates with STA2 through a corresponding second link, i.e., Link 2, and AP communicates with STA3 through a third link, i.e., Link 3. Moreover, Link 1 to Link 3 may be a plurality of links at different frequencies, respectively, for example, links at 2.4GHz, 5GHz, 6GHz, etc., or several links with the same or different bandwidths at 2.4GHz. In addition, there may exist a plurality of channels under each link. It should be understood that the communication scenario shown in FIG. 2 is only illustrative, and the concept of the present disclosure is not limited thereto. For example, the AP MLD may be connected to a plurality of non-AP MI,Ds, or the AP can communicate with a plurality of other types of stations under each link.

When system information of the AP MLD is updated, the non-AP MLD needs to know an update status. Therefore, the non-AP MLD sends to the AP MLD the first radio frame carrying the Basic Service Set (BSS) change indication information, so as to obtain the update content of the system information under one or more communication links. In some embodiments, the non-AP MLD may send the first radio frame in one communication link with the AP MLD to save signaling resources.

In some embodiments, the BSS change indication information includes a BSS change parameter for one communication link or at least two communication links with the AP MLD, and the BSS change parameter includes at least one of the Change Sequence element or the Change Count.

The Change Count records a BSS parameter change count of the AP MLD. In general, an initial value of the Change Count of each AP is 0, and should be incremented (modulo 256) when a critical update of an operation parameter of the AP occurs.

In some embodiments, the first radio frame may be an ML Probe Request.

In this way, the non-AP MLD sends the first radio frame under one link to request the system information update status of the AP MLD. The non-AP MLD may not send, under each link, the BSS change parameter corresponding to this link to save the signaling message. For example, BSS change parameters for all links are sent under one link.

After receiving the first radio frame, the AP MLD compares the change sequence field value in the BSS change parameter with its current most recently maintained change sequence field value. If the comparison result indicates that they are not equal, the AP MLD sends to the non-AP MLD the Change Sequence element and other elements that need to be updated by the non-AP MLD, so that the non-AP MLD executes the corresponding operation according to this update.

In some embodiments of the present disclosure, the access point device further includes:
a radio frame sending module, configured to send a second radio frame, and link identity information is carried in a first Multi-Link (ML) element in the second radio frame.

In embodiments of the present disclosure, the radio frame receiving module 601 receives the first radio frame, the first radio frame carries the BSS change indication information, and the BSS change indication information includes the BSS change parameter for the one or more communication links between the non-AP MLD and the AP MLD to provide the way to indicate the change in the BSS parameter in the multi-link scenario.

Embodiments of the present disclosure further provide a communication device, which is applied to a multi-link-supporting access point device (an AP MLD), and the communication device includes:
a first receiving module, configured to receive a first radio frame, Basic Service Set (BSS) change indication information is carried in the first radio frame, the BSS change indication information includes a BSS change parameter with a station device (a Non-AP MLD), and the BSS change parameter includes a Change Sequence element and/or a Change Count.

The communication device further includes other modules of the access point device in the above embodiments, which will not be described again here.

Embodiments of the present disclosure further provide an electronic device, as shown in FIG. 7. The electronic device 7000 shown in FIG. 7 may be a server, and includes a processor 7001 and a memory 7003. The processor 7001 and the memory 7003 are connected, for example, connected through a bus 7002. In some embodiments, the electronic device 7000 may further include a transceiver 7004. It should be noted that in actual applications, the transceiver 7004 is not limited to one, and the structure of the electronic device 7000 does not constitute a limitation to embodiments of the present disclosure.

The processor 7001 may be a central processing unit (CPU), a general-purpose processor, a digital signal processor (DSP), an application specific integrated circuit (ASIC), a field programmable gate array (FPGA) or other programmable logic device, a transistor logic device, a hardware component, or any combination thereof. It may implement or execute various exemplary logical blocks, modules, and circuits described in conjunction with embodiments of the present disclosure. The processor 7001 may also be a combination for realizing computing functions, for example, including a combination of one or more microprocessors, a combination of a DSP and a microprocessor, or the like.

The bus 7002 may include a path for transferring information among the above-mentioned components. The bus 7002 may be a peripheral component interconnect (PCI) bus or an extended industry standard architecture (EISA) bus or the like. The bus 7002 may be divided into an address bus, a data bus, a control bus, or the like. For ease of representation, only one thick line is used in FIG. 7, but it does not mean that there is only one bus or one type of bus.

The memory 7003 may be a read only memory (ROM) or other types of static storage devices that may store static information and instructions, a random access memory (RAM) or other types of dynamic storage devices that may store information and instructions, an electrically erasable programmable read only memory (EEPROM), a compact disc read only memory (CD-ROM) or other optical disk storage, an optical disk storage (including compressed optical discs, laser discs, optical discs, digital universal discs, Blu-ray discs, etc.), a magnetic disk storage medium or other magnetic storage devices, or any other medium that may be used to carry or store desired program codes in the form of instructions or data structures and may be accessed by a computer, but not limited to this.

The memory 7003 is used to store application program codes for executing solutions of embodiments of the present disclosure, and application program codes are controlled and performed by the processor 7001. The processor 7001 is configured to execute the application program codes stored in the memory 7003 to implement the content shown in the foregoing method embodiments.

The electronic device includes but is not limited to: a mobile terminal such as a mobile phone, a notebook computer, a digital broadcast receiver, a personal digital assistant (PDA), a tablet computer (PAD), a portable multimedia player (PMP), a vehicle terminal (such as a vehicle navigation terminal) or the like, and a fixed terminal such as a digital TV or a desktop computer. The electronic device shown in FIG. 8 is only an example, and should not bring any limitation to the function and scope of embodiments of the present disclosure.

The server provided by the present disclosure may be an independent physical server, or may be a server cluster including a plurality of physical servers or a distributed system, or may be a cloud server providing basic cloud computing services, such as a cloud database, a cloud service, cloud computing, a cloud function, cloud storage, a network service, cloud communication, a middleware service, a domain name service, a security service, a content delivery network (CDN), big data, and an artificial intelligence platform. The terminal device may be a smartphone, a tablet computer, a notebook computer, a desktop computer, a smart speaker, a smart watch and the like, but it is not limited to this. The terminal and the server may be directly or indirectly connected via the wired or wireless communication, which is not limited in the present disclosure.

Embodiments of the present disclosure provide a computer-readable storage medium having a computer program stored thereon which, when running on a computer, enables the computer to perform corresponding content in the foregoing method embodiments.

It should be understood that although various steps in flowcharts of drawings are displayed in sequence as indicated by arrows, these steps are not necessarily performed in sequence in an order indicated by the arrows. Unless explicitly stated in the present disclosure, the execution of these steps is not strictly limited in the order, and they may be executed in other orders. Moreover, at least part of the steps in flowcharts of drawings may include multiple sub-steps or multiple stages. These sub-steps or stages are not necessarily executed at the same time, but may be executed at different moments. The execution order is not necessarily sequential, but they may be performed alternately or alternately with at least a part of other steps or sub-steps or stages of other steps.

It should be noted that the aforementioned computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, device, or apparatus, or a combination thereof. A more specific example of the computer-readable storage medium may include, but not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated in a baseband or as a part of a carrier wave, and a computer-readable program code is carried therein. This propagated data signal may take many forms, including but not limited to electromagnetic signals, optical signals, or any suitable combination thereof. The computer-readable signal medium may also be any computer-readable medium other than the computer-readable storage medium. The computer-readable signal medium may send, propagate, or transmit the program for use by or in combination with the instruction execution system, apparatus, or device. The program code contained on the computer-readable medium may be transmitted by any suitable medium, including but not limited to: wire, optical cable, radio frequency (RF), or the like, or any suitable combination thereof.

The above-mentioned computer-readable medium may be included in the above-mentioned electronic device; or it may exist alone without being assembled into the electronic device.

The foregoing computer-readable medium carries one or more programs, and when the one or more programs are executed by the electronic device, the electronic device is caused to execute the method shown in the foregoing embodiments.

According to an aspect of the present disclosure, there is provided a computer program product or a computer program, the computer program product or the computer program includes computer instructions, the computer instructions being stored in a computer-readable storage medium. A processor of a computer device reads the computer instructions from the computer-readable storage medium, and executes the computer instructions, to cause the computer device to perform the communication method provided in the various implementations mentioned above.

The computer program code used to perform the operations of the present disclosure may be written in one or more programming languages or a combination thereof. The above-mentioned programming languages include object-oriented programming languages, such as Java, Smalltalk, C++, and also conventional procedural programming languages, such as "C" language or similar programming language. The program code may be executed entirely on the user's computer, partly on the user's computer, executed as an independent software package, partly on the user's computer and partly executed on a remote computer, or entirely executed on the remote computer or server. In the case of the remote computer, the remote computer may be connected to the user's computer through any kind of network, including a local area network (LAN) or a wide area network (WAN), or it may be connected to an external computer (for example, using an Internet connection provided by an Internet service provider).

The flowcharts and block diagrams in the accompanying drawings illustrate the possible implementation architecture, functions, and operations of the systems, methods, and computer program products according to various embodiments of the present disclosure. In this regard, each block in the flowchart or block diagram may represent a module, program segment, or part of codes, and the module, program segment, or part of codes contains one or more executable instructions for realizing the specified logic function. It should also be noted that, in some alternative implementations, the function marked in the block may also occur in a different order from the order marked in the drawing. For example, two blocks shown in succession may actually be executed substantially in parallel, and they may sometimes be executed in the reverse order, depending on the functions involved. It should also be noted that each block in the block diagram and/or flowchart, and a combination of blocks in the block diagram and/or flowchart, may be implemented by a dedicated hardware-based system that performs the specified functions or operations or by a combination of dedicated hardware and computer instructions.

The modules involved in the described embodiments of the present disclosure may be implemented in software or hardware. The name of the module does not constitute a limitation on the module itself under certain circumstances. For example, A module may also be described as "A module configured to perform B operation".

The above description is only preferred embodiments of the present disclosure and an explanation of the applied technical principles. Those skilled in the art should understand that the scope involved in this disclosure is not limited to the technical solutions formed by the specific combination of the above technical features, and should also cover the other technical solutions, without departing from the above disclosed concept, formed by arbitrarily combining the above technical features or the equivalent features. For example, the above-mentioned features and the technical features disclosed in the present disclosure (but not limited to) having similar functions are replaced with each other to form the technical solutions.

## Claims

1. A communication method, applied to a multi-link-supporting station device (a Non-AP MLD), and comprising:
sending a first radio frame, wherein Basic Service Set (BSS) change indication information is carried in the first radio frame, the BSS change indication information comprises a BSS change parameter with an access point device (an AP MLD), and the BSS change parameter comprises a Change Sequence element and/or a Change Count.

2. The communication method according to claim 1, wherein the BSS change indication information further comprises link identity information of a target communication link corresponding to each BSS change parameter.

3. The communication method according to claim 2, wherein before the sending the first radio frame, the communication method further comprises:
receiving a second radio frame; and
obtaining the link identity information in a first Multi-Link (ML) element in the second radio frame.

4. The communication method according to claim 1, wherein the BSS change indication information further comprises BSS Parameter Change Count Present, and the BSS Parameter Change Count Present is configured to indicate whether the BSS change indication information is comprised.

5. The communication method according to claim 1, wherein the BSS change indication information further comprises a Multi-Link Device Identity (MLD ID); and
wherein the MLD ID comprises a Media Access Control (MAC) address of the Non-AP MLD.

6. The communication method according to claim 1, wherein the sending the first radio frame comprises:
sending the first radio frame in one communication link.

7. The communication method according to claim 1, wherein the sending the first radio frame comprises:
sending the first radio frame when the Non-AP MLD is in an energy saving state.

8. The communication method according to claim 1, wherein the first radio frame comprises a Multi-Link Probe Request (ML Probe Request); and
the BSS change indication information is carried in a second ML information element of the ML Probe Request, and a type of the second ML information element is Probe Request.

9. The communication method according to claim 8, wherein the BSS change indication information is carried in a per-STA profile sub-element of the second ML information element.

10. The communication method according to any one of claims 1 to 9, wherein the BSS change indication information comprises a BSS change parameter for one communication link or at least two communication links with the AP MLD.

11. A communication method, applied to a multi-link-supporting access point device (an AP MLD), and comprising:
receiving a first radio frame, wherein Basic Service Set (BSS) change indication information is carried in the first radio frame, the BSS change indication information comprises a BSS change parameter with a station device (a Non-AP MLD), and the BSS change parameter comprises a Change Sequence element and/or a Change Count.

12. The communication method according to claim 11, wherein before the receiving the first radio frame, the communication method further comprises:
sending a second radio frame, wherein link identity information is carried in a first Multi-Link (ML) element in the second radio frame.

13. A station device, wherein the station device is a multi-link station device (a Non-AP MLD), and the station device comprises:
a sending module, configured to send a first radio frame, wherein Basic Service Set (BSS) change indication information is carried in the first radio frame, the BSS change indication information comprises a BSS change parameter with an access point device (an AP MLD), and the BSS change parameter comprises a Change Sequence element and/or a Change Count.

14. The station device according to claim 13, wherein the BSS change indication information further comprises link identity information of a target communication link corresponding to each BSS change parameter.

15. The station device according to claim 14, wherein the station device further comprises:
a receiving module, configured to receive a second radio frame; and
an obtaining module, configured to obtain the link identity information in a first Multi-Link (ML) element in the second radio frame.

16. The station device according to claim 13, wherein the BSS change indication information further comprises BSS Parameter Change Count Present, and the BSS Parameter Change Count Present is configured to indicate whether the BSS change indication information is comprised.

17. The station device according to claim 13, wherein the BSS change indication information further comprises a Multi-Link Device Identity (MLD ID); and
wherein the MLD ID comprises a Media Access Control (MAC) address of the Non-AP MLD.

18. An access point device, wherein the access point device is a multi-link-supporting access point device (an AP MLD), and the access point device comprises:
a radio frame receiving module, configured to receive a first radio frame, wherein Basic Service Set (BSS) change indication information is carried in the first radio frame, the BSS change indication information comprises a BSS change parameter with a station device (a Non-AP MLD), and the BSS change parameter comprises a Change Sequence element and/or a Change Count.

19. A communication device, applied to a multi-link station device (a Non-AP MLD), wherein the communication device comprises:
a first sending module, configured to send a first radio frame, wherein Basic Service Set (BSS) change indication information is carried in the first radio frame, the BSS change indication information comprises a BSS change parameter with an access point device (an AP MLD), and the BSS change parameter comprises a Change Sequence element and/or a Change Count.

20. A communication device, applied to a multi-link-supporting access point device (an AP MLD), wherein the communication device comprises:
a first receiving module, configured to receive a first radio frame, wherein Basic Service Set (BSS) change indication information is carried in the first radio frame, the BSS change indication information comprises a BSS change parameter with a station device (a Non-AP MLD), and the BSS change parameter comprises a Change Sequence element and/or a Change Count.

21. An electronic device, comprising a memory, a processor, and a computer program stored in the memory and executable on the processor, wherein the processor implements the communication method according to any one of claims 1 to 12 when executing the program.

22. A computer-readable storage medium having a computer program stored thereon which, when executed by a processor, implements the communication method according to any one of claims 1 to 12.
